(19) Europäisches Patentamt
European Patent Office
Office européen des brevets

(11) EP 4 059 712 A1

(12) **EUROPÄISCHE PATENTANMELDUNG**

(43) Veröffentlichungstag:
**21.09.2022 Patentblatt 2022/38**

(21) Anmeldenummer: **21163094.2**

(22) Anmeldetag: **17.03.2021**

(51) Internationale Patentklassifikation (IPC):
***B33Y 70/00*** *(2020.01)* ***B33Y 70/10*** *(2020.01)*
***C08F 230/08*** *(2006.01)* ***C08G 79/10*** *(2006.01)*
***C08F 220/00*** *(2006.01)* ***C08F 222/10*** *(2006.01)*

(52) Gemeinsame Patentklassifikation (CPC):
**B33Y 70/10; C08F 220/00; C08F 222/1006; C08F 230/085**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
- **Eder, Florian**
**91054 Erlangen (DE)**
- **Pihale, Sven**
**91792 Stopfenheim (DE)**

(54) **HYBRIDE MATERIALZUSAMMENSETZUNG UND VERWENDUNG DAVON IN GENERATIVEN HERSTELLUNGSVERFAHREN**

(57) Die Erfindung betrifft eine hybride Materialzusammensetzung für die Verwendung in generativen Herstellungsverfahren, beispielsweise beim 3D-Drucken insbesondere zur Herstellung großer Strukturen mit einem hochgefüllten Material, das wärmeleitfähig und temperaturstabil ist, sowie dessen Verwendung in einem generativen Herstellungsverfahren. Das Vorliegen zumindest eines Reaktivverdünners in der hybriden Materialzusammensetzung ermöglicht neben einer deutlichen Reduktion des Schrumpfens durch Vernetzung und dadurch bessere Maßhaltigkeit, von etwa 10% auf unter 5% auch die Einflussnahme auf die elastischen und rheologischen Eigenschaften des Hybridpolymers.

EP 4 059 712 A1

## Beschreibung

Die Erfindung betrifft eine hybride Materialzusammensetzung für die Verwendung in generativen Herstellungsverfahren, beispielsweise beim 3D-Drucken insbesondere zur Herstellung großer Strukturen mit einem hochgefüllten Material, das wärmeleitfähig und temperaturstabil ist, sowie dessen Verwendung in einem generativen Herstellungsverfahren.

Es sind einige additive Fertigungsverfahren für die Kunststoffverarbeitung mittels generativer Fertigungsverfahren bekannt. Bei additiven Fertigungsverfahren wird ein Werkstück durch frei im Raum, gegebenenfalls mit Stützstrukturen, materialisierende (Raster-)Punkte und/oder -Linien schichtenweise aufgebaut. Die Fertigung eines Teils oder mehrerer Teile gleichzeitig erfolgt dabei üblicherweise vollautomatisch aus am Computer erstellten CAD "Computer-Aided-Design" - Daten.

Bei der additiven Fertigung wird über Temperatur und/oder Bestrahlung im Material eine Verfestigung bewirkt. Beispielsweise wird ein licht-aushärtender Kunststoff, zum Beispiel ein Acryl-, Epoxid- und/oder Vinylesterharz, von einem Laser in dünnen Schichten beispielsweise in Einzellagen mit Schichtdicken im Bereich von 1$\mu$m bis 0,25 mm, ausgehärtet.

Dabei bestrahlt ein Laser ein Bad, das mit den Basismonomeren eines lichtempfindlichen Kunststoffes gefüllt ist, gezielt an bestimmten Punkten und/oder Linien und/oder in bestimmten Bereichen, die dann insoweit anhärten und/oder angelieren, dass sie nach Fertigstellung als dreidimensionales Bauteil aus dem Bad herausnehmbar sind. Nach dem Abtropfen des nicht angehärteten Harzes aus dem Bad wird das dreidimensionale Bauteil von eventuell vorhandenen Stützstrukturen befreit.

Das so hergestellte dreidimensionale Modell wird dann bevorzugt noch nachgehärtet, dies geschieht in der Regel durch Tempern, Bestrahlung und/oder Trocknen bei erhöhter Temperatur.

Die additive Fertigung ist insbesondere in der Produktentwicklung, bei der Erstellung von Prototypen im Maschinenbau und/oder im Automobilbau, sowie in der Medizin weit verbreitet.

Nachteilig an den bisher bekannten, zur Verwendung in additiven Fertigungsverfahren - beispielsweise aus der DE 10 2017 203 583 - geeigneten Materialien ist, dass diese Materialien nach erfolgter Aushärtung beispielsweise auf dem Weg der so genannten "Verkieselung" oft relativ spröde sind, leicht abblättern und/oder leicht brechen. Dies insbesondere dann, wenn diese Materialien, Füllstoffhaltig sind, beispielsweise durch Füllung mit wärmeleitfähigen Partikeln wärmeleitfähig gemacht sind. Grund hierfür ist, dass die Partikel in der Regel keinem Verfestigungsschrumpf unterliegen, sondern bereits in ihrer finalen Form vorliegen. Aus diesem Grund muss die gesamte thermisch- und schrumpfbedingte Spannung durch das umgebende Netzwerk abgepuffert werden und stellt dessen Material, insbesondere im Falle von hohen Füllgraden vor enorme Herausforderungen.

Besonders nachteilig wirkt sich dabei aus, dass diese ursprünglich flüssigen Materialien durch unterschiedliche Reaktionen, insbesondere durch UV-Vernetzung und/oder Kondensationsreaktionen zu Feststoffen aushärten. Dabei kommt es, je nach Zusammensetzung des Materialsystems zu Schrumpfungserscheinungen und Spannungszuständen, weil das in der ursprünglichen Flüssigkeit vorhandene Lösungsmittel bei der Verfestigung zumindest teilweise eingeschlossen wird und durch Diffusionsprozesse den Feststoff langsam wieder verlässt. Ein dabei auftretender Kapillardruck kann unter ungünstigen Bedingungen sogar zur Ausbildung von Rissen oder gar Aufplatzungen führen und wirkt sich daher nachteilig auf ein so hergestelltes Werkstück, wie beispielsweise eine Kühlstruktur, aus. Eine einfache Reduktion und/oder Anpassung des Lösemittelanteils, wie er beispielsweise bei Lacken und Farben möglich ist, kann beim vorliegenden Material nicht erfolgen. So wird bei der Synthese des Materials ohnehin kein organisches Lösungsmittel zugesetzt - es bildet sich als Abspaltprodukt bei der Reaktion der Monomere in zunehmendem Maße mit fortschreitendem Reaktionsstadium. Zusätzlich zu den organischen Lösungsmitteln, wie z.B. Methanol, Ethanol, Propanol, Butanol, liegt im Material eine geringe Menge an Wasser vor, welche zum Start der Reaktion zugegeben wird und nicht vollständig verbraucht werden kann. Beide Komponenten, also sowohl organisches Lösungsmittel als auch Wasser, verursachen bei der Durchhärtung des Materials die beschriebenen Schrumpf- und/oder Rissbildungserscheinungen.

Aufgabe der vorliegenden Erfindung ist es daher, ein für den Einsatz in additiven Fertigungsverfahren, insbesondere in Licht-induzierten additiven Fertigungsverfahren, einsetzbares Material zur Verfügung zu stellen, das nach dem Aushärten nur noch wenig Lösungsmittel im Feststoff hat, so dass es eine verminderte Rissbildung und/oder verminderte Schrumpfung gegenüber den bislang bekannten Materialzusammensetzungen zeigt.

Diese Aufgabe wird durch den Gegenstand der vorliegenden Erfindung, wie er in der Beschreibung und den Ansprüchen offenbart ist, gelöst.

Dementsprechend ist Gegenstand der vorliegenden Erfindung eine hybride Materialzusammensetzung als Ausgangsmaterial in einem additiven Fertigungsverfahren zur Strahlungsinduzierten Herstellung eines Formkörpers, zumindest ein erstes Material aus einer organofunktionellen Silan-basierten Komponente mit einer Keramik-bildenden alkoxidischen Komponente umfassend, das zusammen mit zumindest einem zweiten Material, welches ein organisch basiertes Fotopolymer enthält, die hybride Materialzusammensetzung bildet, wobei diese hybride Materialzusammensetzung einen Reaktivverdünner umfasst, der die_Viskosität der unvernetzten Materialzusammensetzung herabsetzt

und entweder durch Verdampfen entfernbar ist und/oder nach erfolgter Vernetzung und Durchhärtung der Materialzusammensetzung durch Copolymerisation zu einem Teil des Formkörpers wird. Außerdem ist die Verwendung dieser hybriden Materialzusammensetzung in einem generativen, also beispielsweise additiven, Fertigungsverfahren Gegenstand der vorliegenden Erfindung.

Reaktivverdünner sind zwar zur Einstellung der Rheologie bei thermisch härtenden Lacken bekannt, jedoch konnte hier überraschend festgestellt werden, dass Reaktivverdünner auch bei Einsatz langkettiger Fotopolymere mit organofunktionellen Silan-Verbindungen, also den hier in Rede stehenden Silanbasierten Hybridmaterialzusammensetzungen die Viskosität der unvernetzten Materialzusammensetzung herabsetzen, aber während und nach erfolgter Härtung frei werdendes Lösungsmittel abfangen und verdampfbar machen und/oder miteinpolymerisieren. Dazu eignen sich nur ganz spezielle Reaktivverdünner aus der Verbindungsklasse der Ketone und/oder der Acrylate, also Verbindungen, die die Struktureinheit $H_2C=C(\mathbf{R})-C(\mathbf{R})=O$ umfassen. **R** kann dabei gleich oder ungleich und ein beliebiger einwertiger organischer Rest sein, beispielsweise eine Aryl- oder eine Alkyl-gruppe oder eine Heteroaryl- oder eine Hetereroalkylaryl-gruppe.

Als "durch Verdampfen entfernbar" wird vorliegend bezeichnet, wenn ein Verfahren zur Extraktion zur teilweisen oder vollständigen Abtrennung von unerwünschten Lösungsmitteln und/oder Reaktions-Nebenprodukten einer flüssigen Reaktionsmischung, die auch eine Dispersion von Feststoffen, beispielsweise in Form von Füllstoff-Partikel, umfassen kann, führt. Ein Verfahren zur Extraktion ist z.B. die klassische Rotationsverdampfung, gegebenenfalls unter Unterdruck und Erwärmung. Neben diesem, auch als "Abrotieren", bezeichneten Verfahren können auch chemische und/oder physikalische Sorptionsverfahren verwendet werden, um den Lösungsmittelgehalt zu reduzieren.

Allgemeine Erkenntnis der Erfindung ist es, dass eine Entfernung eines unerwünschten Lösungsmittels und/oder Nebenproduktes - wie z.B. eines Alkohols, also beispielsweise Butanol und/oder Methanol - aus einem flüssigen Reaktionsgemisch möglich ist, ohne dass Nachteile, wie Viskositätserhöhung und/oder Verschlechterung der Lagerstabilität, auftreten, wenn das Lösungsmittel durch ein geeignetes anderes Material ersetzt wird. Dieser Ersatz ist insbesondere mischbar mit dem vorliegenden Materialsystem und/oder hat chemisch die Möglichkeit, mit dem vorliegenden Material eine chemische Reaktion einzugehen, welche einen Einbau ins chemische Netzwerk des herzustellenden Formkörpers zur Folge hat.

Dabei wurde gefunden, dass sich dünnflüssige - also viskose bis hochviskose - Reaktivverdünner als Ersatz eignen. Sie wirken vor der Polymerisation als Lösungsmittel und können nach erfolgter Vernetzung nicht mehr aus dem Festkörper entweichen. Reaktivverdünner kommen häufig bei der Herstellung von Harzen und polymeren Vergussmassen zum Einsatz. Eine Anwendung im Bereich der Silicat-Chemie, insbesondere in einem Sol-Gel-Verfahren, ist bisher unbekannt.

Der erfindungsgemäße Einsatz eines Reaktivverdünners ermöglicht neben einer deutlichen Reduktion des Schrumpfens und dadurch bessere Maßhaltigkeit, z.B. von etwa 10Vol% auf unter 5Vol% auch die Einflussnahme auf die elastischen und rheologischen Eigenschaften der hybriden Materialzusammensetzung. So können die immer noch geringfügig sich ausbildenden Spannungszustände bei der Verfestigung besser im Formkörper abgefedert und verteilt werden, thermische Schockzustände ohne die Ausbildung von Rissen ablaufen und/oder vor allem auch höhere Füllgrade mit wärmeleitfähigkeitssteigernden Partikeln im Vergleich zu nicht mit Reaktivverdünner gemischten hybriden Materialzusammensetzungen, bewirkt werden. Höhere Füllgrade mit wärmeleitfähigen Füllstoffen führen insgesamt zu höhere Wärmeleitfähigkeiten. Da sich mehrere Reaktivverdünner mit unterschiedlichen Kettenlängen für die Anwendung in der beschriebenen hybriden Materialzusammensetzung eignen, können Viskosität und Elastizität nicht nur über die Menge des Reaktivverdünners, sondern zusätzlich über den verwendeten Typ eingestellt werden. Die Verwendung von Mischungen der Reaktivverdünner ist ebenfalls möglich.

Die Zugabe des Reaktivverdünners und die Entfernung der organischen Reaktionsprodukte mittels Abrotierens erfolgt bevorzugt, nachdem im letzten Syntheseschritt das Wasser zur Hydrolyse zugegeben wird.

Als "erstes Material" wird vorliegend eine Komponente bezeichnet, die eine organofunktionelle Silan-Verbindung ist oder zumindest hauptsächlich umfasst, wobei sie insbesondere bevorzugt als Ausgangsmolekül sowohl Alkoxide wie auch organofunktionelle Reste hat. Die organischen Reste bleiben bei der Materialsynthese vollständig erhalten und reagieren erst bei der Verarbeitung. Die Alkoxidgruppen können in Anwesenheit von Wasser unter Abspaltung von Alkohol, insbesondere verschiedenen Alkoholen, wie Methanol, Ethanol, Propanol etc. zu Silanolgruppen (-OH) reagieren. Diese Gruppen wiederum bilden während einer unerwünschten Alterung des Materials, jedoch insbesondere bei der thermischen Nachvernetzung unter Wasserabspaltung die "Glaskomponente" Si-O-Si.

Das Molgewicht dieser organofunktionellen Silan-Verbindungen liegt in der Regel im Bereich von 100g/mol bis 400g/mol, insbesondere von 150g/mol bis 300g/mol, ganz besonders von 200g/mol bis 250g/mol.

Die zweite Komponente der hier in Rede stehenden Materialzusammensetzung ist eine keramikbildende Komponente, eine zumindest ein Silizium-, Aluminium-, Zirkonium- und/oder Titan-Element umfassende, insbesondere als Komplex vorliegende, Verbindung, die zumindest einen alkoxidischen Liganden umfasst. Diese Komponente enthält grundsätzlich keine oder nur geringe Anteile an organofunktionellen Gruppen und hat bevorzugt nur alkoxidische Liganden.

Durch eine Kondensationsreaktion, beispielsweise im Sol-Gel-Verfahren, werden erste und zweite Komponente miteinander zur Reaktion gebracht wobei ein erstes Material entsteht, das eine oxidische Verbrückung zwischen zwei Zentralatomen zeigt, z.B. zwischen einem der folgenden Atome: Silizium-, Aluminium-, Zirkonium- und/oder Titan- und/oder auch mehreren untereinander in beliebigen Kombinationen und Mischungen.

Dieses "erste Material" ist eine organofunktionelle Silanverbindung, die mit zumindest einer keramik-bildenden alkoxidischen Komponente zumindest teilweise unter Kondensation abreagiert hat. Dieses wird im Folgenden auch als "anreagiertes Silangemisch" bezeichnet.

Bevorzugt liegen in dem so gebildeten ersten Material die organofunktionelle Silanverbindung und die keramikbildende Komponente im Verhältnis im Bereich von 99mol% zu 1mol% bis zu 30mol% zu 70mol% vor, wobei der Anteil an organofunktionellen Silanverbindung mol-mäßig im ersten Material bevorzugt überwiegt.

Als "Hybridmaterial" oder "hybride Materialzusammensetzung" wird dabei ein Gemisch aus einem flüssigen Fotopolymer mit dem ersten Material, das ein mit keramik-bildender Komponente anreagiertes Silangemisch ist, bezeichnet. Völlig überraschend hat sich dabei gezeigt, dass diese beiden Elemente - anreagiertes Silangemisch einerseits und flüssiges Fotopolymer andererseits, praktisch unbegrenzt miteinander mischbar sind. Es findet unter Normalbedingungen weder eine Entmischung noch eine Phasenbildung noch eine Reaktion statt. Gemäß der vorliegenden Erfindung wird dieser hybriden Materialzusammensetzung zumindest ein Reaktivverdünner zugegeben, wobei die Materialzusammensetzung zu diesem Zeitpunkt noch nicht ausgehärtet, aber gegebenfalls vorvernetzt und/oder in einem vorpolymerisierten Zustand, vorliegt.

Zur Bildung der hybriden Materialzusammensetzung wird dem ersten Material zumindest ein unter Normalbedingungen, also Raumtemperatur und 1 Atmosphäre Druck, flüssig vorliegendes Fotopolymer zugesetzt. Dieses wird in einer Gewichts-Menge, bezogen auf die Gesamtsubstanz der hybriden Materialzusammensetzung, von 1 Gew% bis 50 Gew%, insbesondere von 10 Gew% bis 40Gew% und besonders bevorzugt in einer Menge von 20 Gew% bis 30 Gew% zugesetzt.

Eine typische hybride Materialzusammensetzung umfasst neben dem unter Normalbedingungen flüssigen Fotopolymer bevorzugt noch einen Fotoinitiator, beispielsweise eine Verbindung aus der Klasse der Phenone, Phosphinoxide, insbesondere das BAPO, TPO-L.

Für den Einsatz im 3D-Druck sind metallorganische Materialien, wie "Wasserglas" bekannt, das mit geeigneten organischen Liganden, wie Acrylat-, Alkyl-Acrylat-, Epoxid-, Styrol- und/oder Anhydrid-Liganden unter Normalbedingungen die keramik-bildende Komponente darstellen können. Dabei können in der keramik-bildenden Komponente beliebige Kombinationen aus Zirkonium-, Silizium-, Titan- und/oder Aluminium-Sauerstoff-, und/oder Phosphor-Bindungen mit organischen Liganden vorliegen. Die Liganden können verbrückende oder nichtverbrückende Liganden umfassen.

Als "Ligand" wird dabei ein Atom oder ein Molekül bezeichnet, das über eine so genannte "dative" Bindung an ein Metallatom koordiniert. Die dative Bindung geht dabei in der Regel über ein freies Elektronenpaar in der Valenzschale zumindest eines Atoms des Liganden an das zentrale Metallatom.

Diese mit - insbesondere wärmeleitfähigen - Partikeln füllbaren Materialien lassen sich mit Fotopolymeren wie Acrylaten und/oder Styrolen, insbesondere Hydroxylalkyl- und/oder Hydroxyl-Bis- oder multi-Alkyl-Acrylaten und/oder -Styrolen durch vorhandene Chromophore und/oder durch Fotoinitiatoren lagerstabil mischen, so dass sie erst bei geeigneter Bestrahlung instabil werden und irreversibel zum Formkörper abreagieren.

Durch die Zugabe von langkettigen Fotopolymeren, also solchen, die Ketten mit 5 bis 50, insbesondere von 10 bis 30 Methylengruppen ($-CH_2-$) haben, lässt sich die Flexibilität und/oder Elastizität des ausgehärteten Formkörpers einstellen. Erfolgreich getestete Fotopolymere sind Acrylat-Verbindungen oder Gemische von Acrylat-Verbindungen, zumindest ein Acrylat aus der folgenden Gruppe enthaltend: Trimethylpropantriacrylat (TMPTA), Urethandimethylacrylat (UDMA), Ethylenglykoldimethacrylat (EGDMA), 1,6 Hexadioldiacrylat (HDODA); Bisphenol-A-Ethoxydiacrylat (BAEDA) in beliebigen Kombinationen und/oder Mischungen.

Die Fotopolymere werden, zur Herstellung der hybriden Materialzusammensetzung, mit dem anreagierten Silangemisch in einer Menge von 3 bis 40 Masseprozent, insbesondere in einer Menge von 5 bis 30 Masseprozent und insbesondere bevorzugt in einer Menge von 10 bis 25 Masseprozent zugegeben. Die Masseprozent beziehen sich dabei auf die Trockenmasse.

Als "Fotoinitiatoren" und/oder "Chromophore" werden vorliegend chemische Verbindungen oder Teile von chemischen Verbindungen bezeichnet, die Strahlungsinduziert, also nach Absorption von UV-Licht, insbesondere in Form von elektromagnetischer Strahlung, in einer Fotolysereaktion zerfallen und so reaktive Spezies bilden, die eine Reaktion starten (initiieren) wobei die reaktive Spezies ein Radikal und/oder ein Kation sein kann.

Ein Fotoinitiator kann eine separate Komponente innerhalb der hybriden Materialzusammensetzung sein und/oder ein oder mehrere chromophor wirkender Molekülbestandteil sein. Der chromophor wirkende Molekülbestandteil kann auch in einer metallorganischen Verbindung, wie dem anreagierten Silangemisch, enthalten sein.

Der Fotoinitiator und/oder das Chromophor jedenfalls absorbieren die UV-Strahlung und bilden entweder ein reaktives Radikal oder ein reaktives Kation oder beides. Dieses "greift" dann die an sich lagerstabile hybride Materialzusammensetzung an, so dass in der hybriden Materialzusammensetzung eine Kettenreaktion in Gang gesetzt wird,

die unmittelbar eine Verfestigung der hybriden Materialzusammensetzung insoweit bewirkt, dass ein dreidimensionaler Formkörper gebildet wird, der aus einem Tauchbad und/oder einem Pulverbett im Stück herausnehmbar ist. Dieser verfestigte, aber in der Regel noch nicht ausgehärtete Formkörper wird dann entweder durch Zeitablauf und/oder durch weitere Bestrahlung und/oder durch Erwärmung durchgehärtet.

Häufig industriell eingesetzte radikalisch wirkende Fotoinitiatoren leiten sich von α-Hydroxy-; α-Alkoxy- und/oder α-Amino-Arylketonen und/oder auch Acylphosphinoxiden, insbesondere von bis-Acylphosphinoxiden ab. Vereinzelt finden sich auch Anwendungen für fotolabile aliphatischen Azoverbindungen, die sowohl thermisch als auch fotochemisch zerfallen können.

Häufig industriell eingesetzte kationisch wirkende Fotoinitiatoren sind Salze von organischen Säuren, wie Sulfonium-Verbindungen, Iodonium-, Ferrocenium-, Phenacyltriphenylphosphonium, Pyrylium und/oder Thiapyrilium- Verbindungen.

Zur Herstellung von insbesondere wärmeleitfähigen Formkörper aus einer Materialzusammensetzung nach der Erfindung wird der flüssigen Mischung noch Füllstoff, insbesondere wärmeleitfähiger metallischer und/oder keramischer Füllstoff zugegeben.

Im Folgenden wird die Erfindung noch anhand von einem Ausführungsbeispiel näher erläutert:
Es wurde ein mol Aluminium-sec-butoxid (ASB) vorgelegt. Dieses wurde mittels eines Eisbades auf ca. 10°C gekühlt. Zunächst wurde zur Vermeidung einer Fällungsreaktion von ASB durch Bildung eines Chelatkomplexes mit Ethylacetoacetat (EAA) im molaren Verhältnis 1:1 zum ASB geschützt. Da die Komplexbildung exotherm ist, wurde die Temperatur bei der Zugabe überwacht und sollte 13°C nicht überschreiten. Nach einer halben Stunde Rühren erfolgte die Zugabe von jeweils 2 mol der Silane 3-Trimethoxysilylmethylmethacrylate (MAMTMS) und 3-Glycidyloxyprpyltrimethoxysilane (GPTMS), welches tropfenweise innerhalb von 5 Minuten zugegeben wurde. Eine Stunde nach Zugabe der Silane erfolgte die kontrollierte Hydrolysereaktion durch Zutropfen von 15 mol Wasser. Nach zwölf Stunden Rühren ist die Reaktion des Hybridmaterials beendet und die Weiterverarbeitung mit Reaktivverdünner und Abrotieren wird vorgenommen.

Bei der Hydrolysereaktion entstehen somit für oben genannten Ansatz pro Mol Silicium-Precursoren und Aluminium-Precursoren jeweils drei Mol Methanol und drei Mol 2-Butanol. Bezogen auf die möglichen Kondensationsprodukte der eingesetzten Silane wird mit untenstehender Formel daraus die benötigte Menge an Reaktivverdünner berechnet. So wird beispielsweise ein Massenanteil von 20 w% auf die spätere Gesamtmasse des entstehenden Hybridmaterials vor dem Abrotieren hinzugegeben.

$$m\,(\text{Reaktivverd.}) = \frac{\text{w\% (Reaktivverd. im Gesamtsystem)} \cdot m_{\text{Theoretisch}}\,\text{(Hybridmat nach Abrotieren)}}{\text{w\% (Hybridmat. im Gesamtsystem)}}$$

Im oben genannten Ansatz entstehen somit für **100g** Ausgangsedukte
**ca. 24,6g Methanol und ca. 14,2g Butanol = ∑38,8g**
38,8 g an Alkohol, der in den Formkörper nicht einvernetzen kann, also im Endeffekt unter Umständen zu Schrumpfungen führen wird.

Es verbleiben => **61,2g** an theoretischer Masse der hybriden Materialzusammensetzung ohne Reaktivverdünner.

Die Summe von **38,8 g** ist die theoretische Menge an Lösungsmittel die theoretisch entfernt, z. B. abrotiert, werden sollte.

**20 Gew%** Reaktivverdünner werden beispielsweise dann zugegeben, die entsprechen einer Menge von **15,3g.**

Die hybride Materialzusammensetzung, zumindest die keramikbildende Substanz, das Silan, den Reaktivverdünner und das Fotopolymer, z.B. Urethandimethacrylate (UDMA), Ethylenglykol-dimethacrylat (EGDMA), 1,6 Hexadioldiacrylat (HDODA); Bisphenol-A-ethoxydiacrylat (BAEDA), Trimethylpropantriacrylat (TMPTA), etc. umfassend, wird zur Entfernung des Alkohols in einen 500ml Rundkolben eingewogen. Der Rundkolben wird nun an einen Rotationsverdampfer angeschlossen und im Wasserbad auf <30°C eingestellt, wobei der Druck langsam auf p kleiner 100 mbar gesenkt wird. Dieser Unterdruck wird ein paar Minuten gehalten, wobei der Kolben mit einer Umdrehung von ca. 200 Rmin-1 rotiert und danach wieder mit Luft geflutet wird.

Es konnte ein Material auf Basis einer Silanmischung erhalten werden, das sowohl [$R_2$Si-O-Si-] als auch [$R_2$Si-O-Al-O-]- Einheiten aufweist.

Hier wird die Reaktion beispielsweise als Sol-Gel-Reaktion, die eine Kondensation umfasst, ausgeführt.

Diese beispielhafte Reaktion nach einer Ausführungsform der Erfindung zur Bildung eines der möglichen "anreagierten Silangemische" respektive des ersten Materials, das in einem späteren Verfahrensschritt mit flüssigem Fotopolymer (hier nicht gezeigt) gemischt wird, wird im Folgenden anhand eines Reaktionsschemas dargestellt:

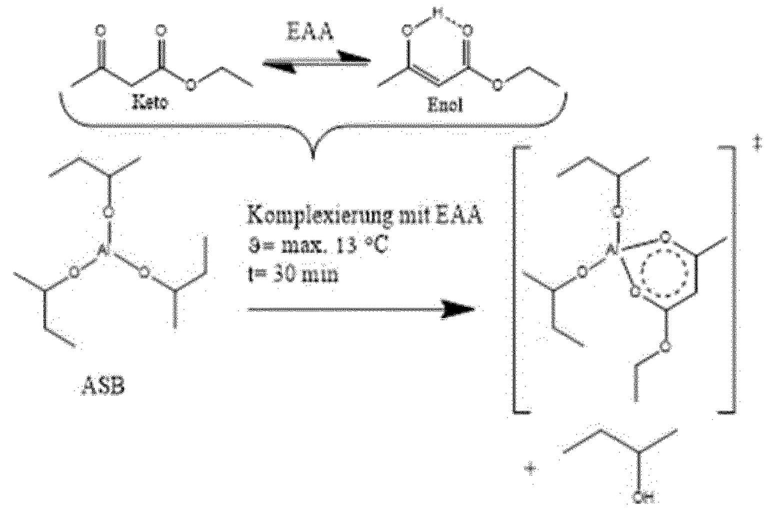


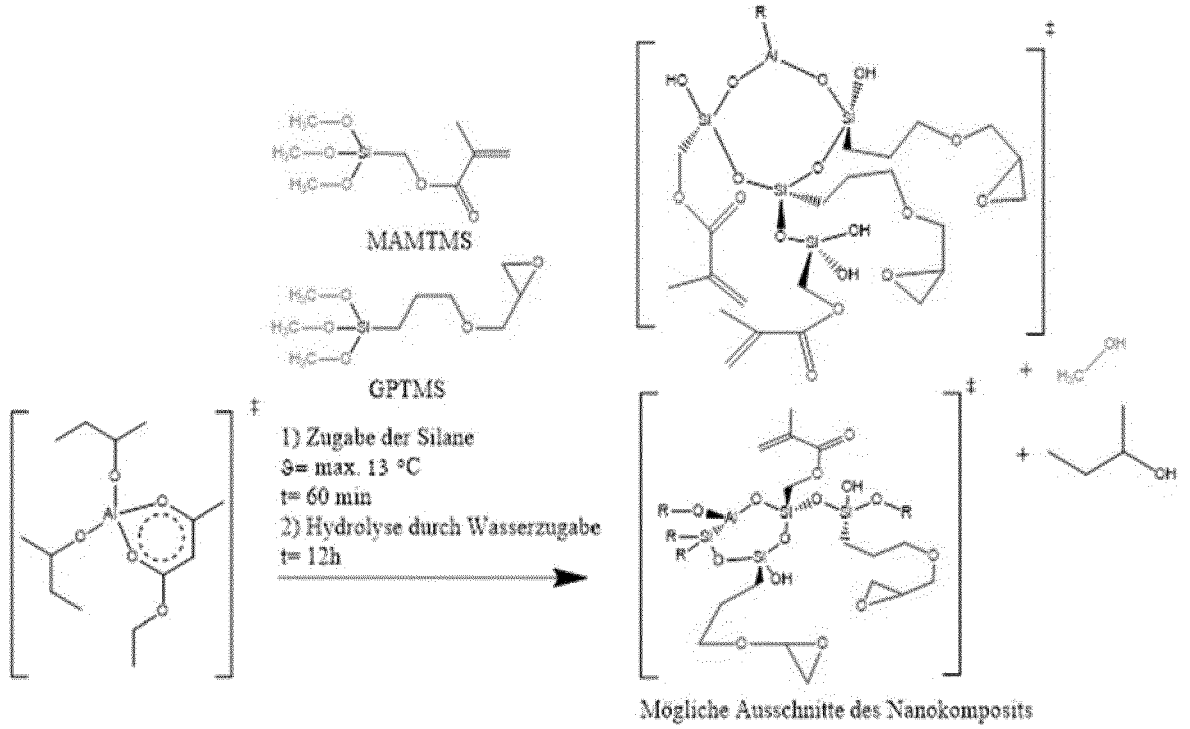


Mögliche Ausschnitte des Nanokomposits

Auf der Produktseite zeigt das Reaktionsschema lediglich Ausschnitte der erhaltenen Produkte an, die möglicherweise aber nicht zwangsläufig in der Form entstehen. Wie dem Fachmann bewusst ist, können hier verschiedene Produkte herauskommen, die mal in dieser und mal in einer anderen Verknüpfung vorliegen, wobei immer sowohl [$R_2$Si-O-Si-] als auch [$R_2$Si-O-Al-O-]- Einheiten nachweisbar sind.

Im Reaktionsschema ist besonders gut die Entstehung der Lösungsmittel Methanol und 2-Butanol zu erkennen, wobei das durch Zugabe eines Reaktivverdünners wie eines Acrylats, eines Ketons abgefangen und in den Formkörper mit-einpolymerisiert werden kann.

Beispielsweise können folgende Verbindungen gemäß bevorzugter Ausführungsformen der Erfindung als Reaktivverdünner in einer Materialzusammensetzung einzeln oder in beliebiger Mischung eingesetzt werden:

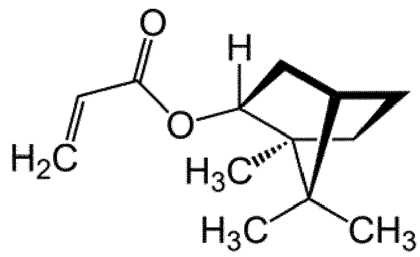

Exo-1,7,7-trimethylbicyclo[2.2.1]hept-2-yl acrylat Trivialname: Isobornylacrylat CAS-NR:5888-33-5;

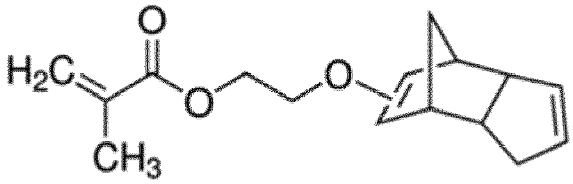

Dicyclopentenyloxyethyl-Methacrylat CAS-Nr. 68586-19-6;

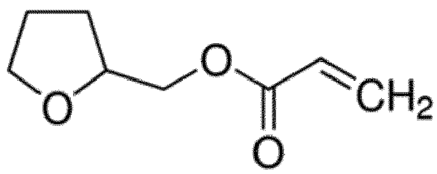

Tetrahydrofurfurylacrylat CAS Nr. 2399-48-6;

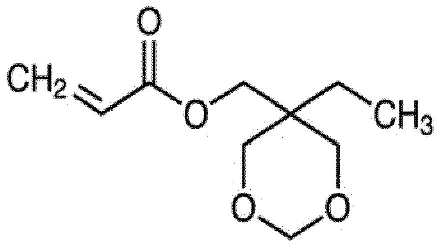

(5-Ethyl-1,3-dioxan-5-yl) -Methylacrylat CAS-Nr. 66492-51-1;

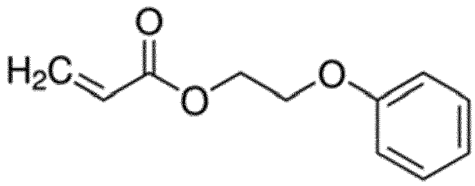

2-Phenoxyethyl-acrylate CAS-Nr. 48145-04-6;

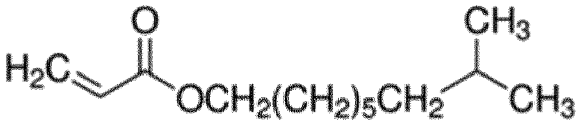

Iso-decylacrylat
CAS Nr. 1330-61-6;

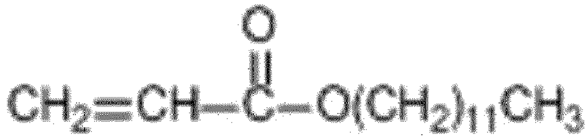

Dodecylacrylat
CAS-Nr. 2156-97-0;

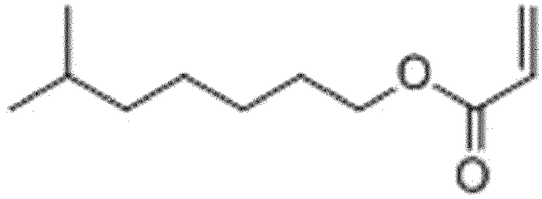

Iso-Octylacrylat
CAS-Nr. 29590-42-9;

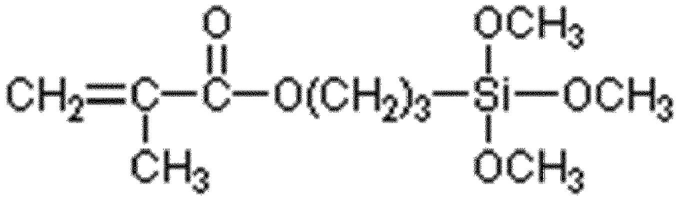

3-(Trimethoxysilyl)propylmethacrylat
CAS-Nr.2530-85-0;

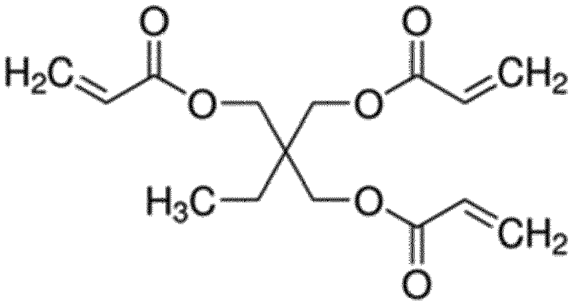

Trimethylolpropantriacrylat
CAS-Nr. 15625-89-5;

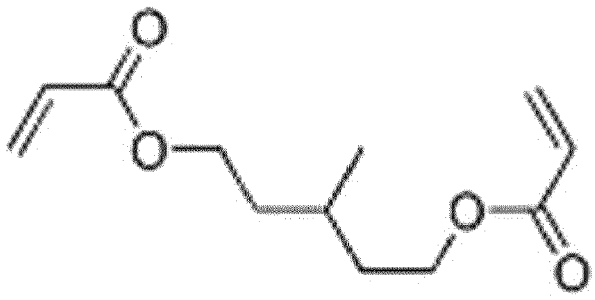

3-Methyl-1,5-pentandiyldiacrylat
CAS-Nr. 64194-22-5;

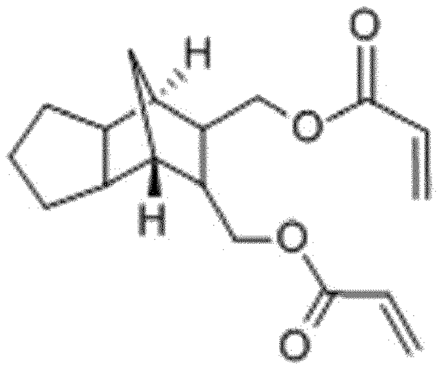

(Octahydro-4,7-methano-1H-indendiyl)bis(methylen)diacrylat
CAS-Nr. 42594-17-2;

Als Füllstoffe, insbesondere auch als wärmeleitfähige Füllstoffe werden beispielsweise metallische und/oder keramische beschichtete und/oder unbeschichtete Partikel eingesetzt. Die Partikel können als Mischungen mehrerer Fraktionen vorliegen, die sich im Material, der Form, der Größe etc. unterscheiden können. Füllstoffe können dem Material unterschiedliche Eigenschaften, wie Wärmeleitfähigkeit, elektrische Leitfähigkeit, Farbe, metallischen Glanz, usw. verleihen.

Füllstoffe und/oder sonstige Additive können in der hybriden Materialzusammensetzung nach der Erfindung in einer Menge von 0 bis 70 Gew%, insbesondere von 0 bis 60Gew% und bevorzugt von 0 bis 40% enthalten sein.

Das Vorliegen zumindest eines Reaktivverdünners in der hybriden Materialzusammensetzung ermöglicht neben einer deutlichen Reduktion des Schrumpfens durch Vernetzung und dadurch bessere Maßhaltigkeit, von etwa 10% auf unter 5% auch die Einflussnahme auf die elastischen und rheologischen Eigenschaften des Hybridpolymers. So können die immer noch geringfügig sich ausbildenden Spannungszustände bei der Verfestigung besser im Werkstoff abgefedert und verteilt werden, thermische Schockzustände ohne die Ausbildung von Rissen ablaufen und insgesamt höhere Füllgrade mit wärmeleitfähigkeitssteigernden Partikeln - das bewirkt insgesamt höhere Wärmeleitfähigkeiten eines daraus hergestellten Formkörpers - realisiert werden. Da sich mehrere Reaktivverdünner mit unterschiedlichen Kettenlängen für die Anwendung im beschriebenen Materialsystem eignen, können Viskosität und Elastizität nicht nur über die Menge des Reaktivverdünners, sondern zusätzlich über den verwendeten Typ eingestellt werden. Die Verwendung von Mischungen der Reaktivverdünner ist ebenfalls möglich.

## Patentansprüche

1. Hybride Materialzusammensetzung als Ausgangsmaterial in einem additiven Fertigungsverfahren zur Strahlungsinduzierten Herstellung eines Formkörpers, zumindest ein erstes Material aus einer organofunktionellen Silanbasierten Komponente mit einer Keramik-bildenden alkoxidischen Komponente umfassend, das zusammen mit zumindest einem zweiten Material, welches ein organisch basiertes Fotopolymer enthält, die hybride Materialzusammensetzung bildet, wobei diese hybride Materialzusammensetzung einen Reaktivverdünner umfasst, der die Viskosität der unvernetzten Materialzusammensetzung herabsetzt und entweder durch Verdampfen entfernbar ist und/oder nach erfolgter Vernetzung und Durchhärtung der Materialzusammensetzung durch Copolymerisation zu einem Teil des Formkörpers wird.

**2.** Materialzusammensetzung nach Anspruch 1, bei dem im ersten Material die organofunktionelle Silan-basierten Komponente überwiegt.

**3.** Materialzusammensetzung nach einem der Ansprüche 1 oder 2, wobei die keramik-bildende zweite Komponente ein Oxid eines Siliziums, Titans, Aluminiums, Bors und/oder Zirkoniums umfasst.

**4.** Materialzusammensetzung nach einem der vorhergehenden Ansprüche, wobei das Molgewicht der organofunktionellen Silanverbindung im Bereich von 100 g/mol bis 400g/mol liegt.

**5.** Materialzusammensetzung nach einem der vorstehenden Ansprüche, wobei zumindest ein Reaktivverdünner ausgewählt ist aus der Gruppe folgender Verbindungen: Acrylate, Ketone, Phenone und/oder Phosphinoxide.

**6.** Materialzusammensetzung nach einem der vorstehenden Ansprüche, wobei zumindest ein Reaktivverdünner ausgewählt ist aus der Gruppe folgender Verbindungen:

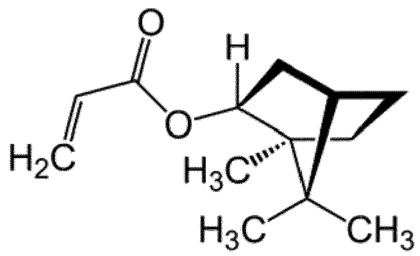

Exo-1,7,7-trimethylbicyclo[2.2.1]hept-2-yl acrylate
Trivialname: Isobornylacrylat, CAS-NR:5888-33-5;

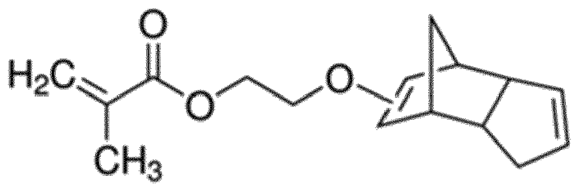

Dicyclopentenyloxyethyl-Methacrylat
CAS-Nr. 68586-19-6;

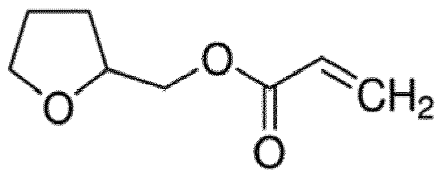

Tetrahydrofurfurylacrylat
CAS Nr. 2399-48-6;

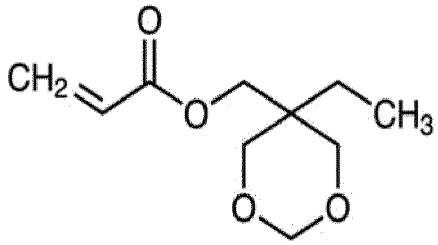

(5-Ethyl-1,3-dioxan-5-yl) -Methylacrylat

CAS-Nr. 66492-51-1;

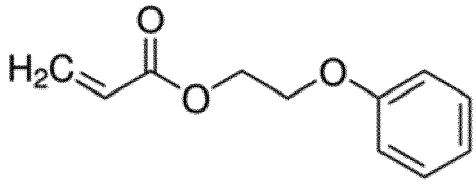

2-Phenoxyethyl-acrylate
CAS-Nr. 48145-04-6;

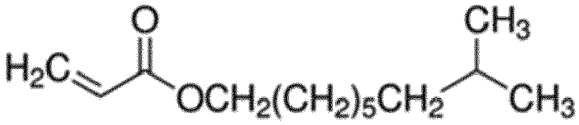

Iso-decylacrylat
CAS Nr. 1330-61-6;

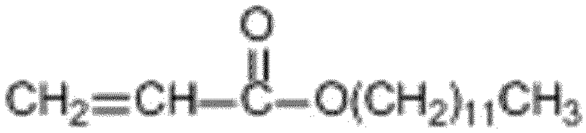

Dodecylacrylat
CAS-Nr. 2156-97-0.

7. Materialzusammensetzung nach einem der vorstehenden Ansprüche, wobei zumindest ein Reaktivverdünner ausgewählt ist aus der Gruppe folgender Verbindungen:

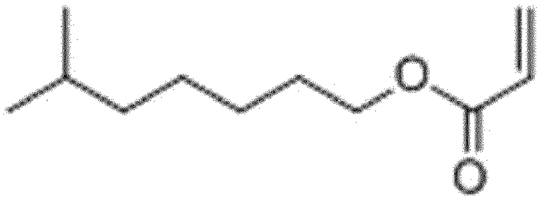

Iso-Octylacrylat
CAS-Nr. 29590-42-9;

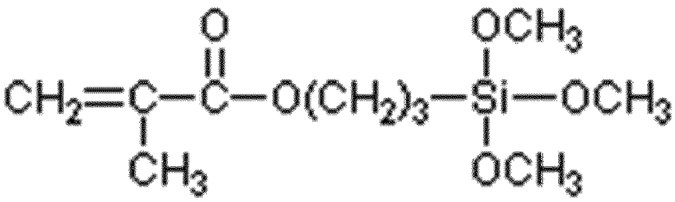

3-(Trimethoxysilyl)propylmethacrylat
CAS-Nr.2530-85-0;

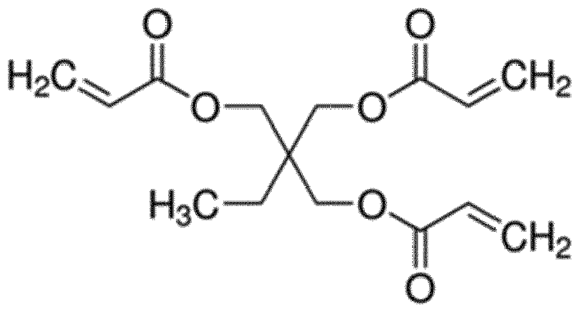

Trimethylolpropantriacrylat
CAS-Nr. 15625-89-5;

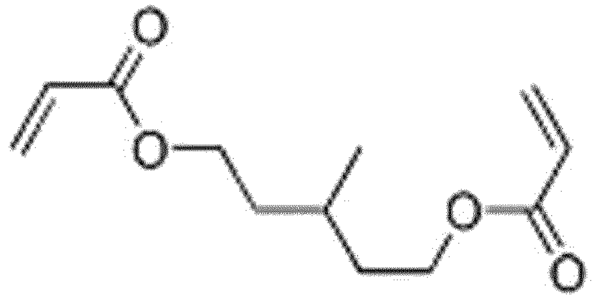

3-Methyl-1,5-pentandiyldiacrylat
CAS-Nr. 64194-22-5;

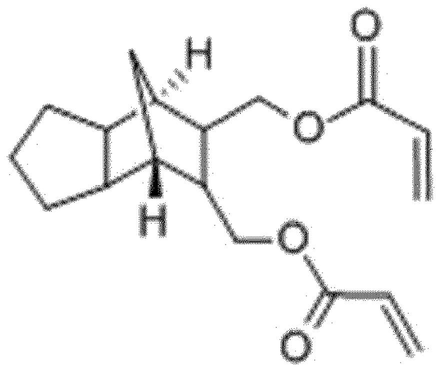

(Octahydro-4,7-methano-1H-indendiyl)bis(methylen)diacrylat
CAS-Nr. 42594-17-2.

**8.** Materialzusammensetzung nach einem der vorstehenden Ansprüche, wobei das flüssig vorliegende Fotopolymer und/oder der Reaktivverdünner und/oder das Reaktivverdünner-Gemisch und das erste Material im Verhältnis - in Gewichtsprozent - von 1 Gew% zu 99 Gew% bis 50 Gew% zu 50 Gew% vorliegen.

**9.** Materialzusammensetzung nach einem der vorhergehenden Ansprüche, wobei das Fotopolymer eine Acrylat-Verbindung ist.

**10.** Materialzusammensetzung nach Anspruch 7, wobei zumindest ein Acrylat in der Materialzusammensetzung ausgewählt ist aus der Gruppe folgender Acrylate: Trimethylpropantriacrylat (TMPTA), Urethandimethylacrylat (UDMA), Ethylenglykoldimethacrylat (EGDMA), 1,6 Hexadioldiacrylat (HDODA), Bisphenol-A-ethoxydiacryla (BAEDA) alle vorgenannten Acrylat-Verbindungen in beliebigen Kombinationen und/oder Mischungen vorliegend.

**11.** Materialzusammensetzung nach einem der vorhergehenden Ansprüche, die Füllstoffe umfasst.

**12.** Materialzusammensetzung nach einem der vorhergehenden Ansprüche, die wärmeleitfähige Füllstoffe umfasst.

**13.** Materialzusammensetzung nach einem der vorhergehenden Ansprüche, wobei der Fotoinitiator nur in katalytischen Mengen von 0,01 bis 5 Gew% - wieder bezogen auf die Masse des unvernetzten flüssigen Materialgemisches - vorliegt.

**14.** Verwendung einer Materialzusammensetzung nach einem der vorhergehenden Ansprüche in einem generativen Fertigungsverfahren, bei dem mittels UV-Licht vernetzt wird.

Europäisches Patentamt
European Patent Office
Office européen des brevets

# EUROPÄISCHER RECHERCHENBERICHT

Nummer der Anmeldung
EP 21 16 3094

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | ANNALISA CHIAPPONE ET AL: "3D Printed PEG-Based Hybrid Nanocomposites Obtained by Sol-Gel Technique", APPLIED MATERIALS & INTERFACES, Bd. 8, Nr. 8, 19. Februar 2016 (2016-02-19), Seiten 5627-5633, XP055527706, US ISSN: 1944-8244, DOI: 10.1021/acsami.5b12578 * Zusammenfassung * * experimental section; Seite 5628, linke Spalte * * Tabelle S1 * * Seite 5629, linke Spalte, Absatz 2. * ----- | 1-14 | INV. B33Y70/00 B33Y70/10 C08F230/08 C08G79/10 C08F220/00 C08F222/10 |
| Y | CN 108 726 997 A (UNIV SHANDONG) 2. November 2018 (2018-11-02) * Anspruch 1 * * Absätze [0025] - [0027] * ----- | 1-14 | |
| | | | RECHERCHIERTE SACHGEBIETE (IPC) |
| | | | B33Y C08F C09J C08G |

Der vorliegende Recherchenbericht wurde für alle Patentansprüche erstellt

1

| Recherchenort | Abschlußdatum der Recherche | Prüfer |
|---|---|---|
| Den Haag | 3. September 2021 | Fernandez Recio, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 21 16 3094

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2021

| Im Recherchenbericht angeführtes Patentdokument | Datum der Veröffentlichung | Mitglied(er) der Patentfamilie | Datum der Veröffentlichung |
|---|---|---|---|
| CN 108726997 A | 02-11-2018 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102017203583